# EUROPEAN PATENT APPLICATION

(11) **EP 2 738 723 A1**
(43) Date of publication of application: **04.06.2014**
(21) Application number: 13275291.6
(22) Date of filing: 28.11.2013
(51) Int. Cl.: G06Q 20/12, G06Q 20/32, G06Q 30/00

(54) **Service and product purchase and payment system**

(30) Priority: 29.11.2012 BR 102012030393
(71) Applicant: Campos, Rodrigo Otavio Dias, Sao Paulo, SP 01227-100 (BR)
(72) Inventor: Campos, Rodrigo Otavio Dias, Sao Paulo, SP 01227-100 (BR)
(74) Representative: Lucas, Brian Ronald

(57) **Abstract**

which features a pre-payment solution for services and/or products with a hybrid "NFC" (Near Field Communication) and SMS (Short Message Service) solution, with the present system providing an infrastructure composed of a data center (1) which acts as a central hub for the system and establishes double-way ERP (Enterprise Resource Planning) communication with a second data center (2) which acts as Host Colocation, with the data center (2) establishing communication to a mobile device (3) of the Smartphone category and properly equipped with the application employed in the present system; the second data center (2) established communication also with POS (4), as well as with the servers (5) of sales establishments registered to the system.

## Description

The present specification relates to a patent application for an invention which presents a specially developed system for execution of purchase payments for products and services in a simple and fast manner, and which avoids and even eliminates the need for conventional payment systems.

As it is commonly known, the purchase of products/services is normally done through conventional means which normally require the physical presence of the purchaser at the place of purchase of the product and/or service of interest, a location where the product and/or service is chosen and the payment method is determined, which may either be by cash, check, bank voucher, credit/debit card, etc.

Recently, yet, the purchase of products and/or services through the Internet has been increasing in popularity, a model that demands the customer to visit the product and/or service provider's website. Once connected to the site, the purchaser follows standard routines for selection of the purchasable item of his/her interest and determination of the payment method, normally by bank voucher or credit/debit card.

Older payment systems invariably require the presence of the purchaser to the place of purchase, while on internet-made purchases, it is required that the purchaser have access to the website of the provider company through a computer device.

The main inconvenience found on the state of the art relates to the queues which are normally formed on specific moments or places of great concentration or circulation of people, such as fast food restaurants, cafeterias, movie theaters, lottery houses, general transports (more specifically, subway transports), concert venues and places holding sales promotions and events.

In face of the present state of the art, the present payment and purchase system was developed, object of this patent application for invention, which is based on the utilization of mobile phones, especially models with internet access, in order to enable a new payment method which provides the purchaser with greater convenience, total safety and efficiency for acquiring products, be it either a product or a service.

The system hereby presented, henceforth referred to as "Nofeela", brings improvements such as the possibility of incrementing retail sales, sorting out operation distortions and inefficiencies verified in other conventional systems.

The present system aggregates, in a positive manner, pre-payment solutions for services and/or products with a hybrid "NFC" (Near Field Communication) and SMS (Short Message Service) solution, thus allowing, in a more direct manner, for the elimination of queues, increase and equalization of revenue, cost reduction and overall customer satisfaction.

The system presented herein allows for management and optimization of queues in environments with large circulation of people, bringing together the benefits of the internet to the actual physical environment, maximizing purchasing experiences for the customers.

The present payment system allows for the purchase of a product and/or service without need for the customer to be organized in a conventional queue, so in order to use the present system, the customer heads to a "non-queue", where only the release of the purchased product is made through the use of a software "Nofeela APP" on a scanner attached to the cashbox of the commercial establishment.

After executing the steps above, the customer must only head to the order redemption queue, mostly smaller or even completely empty, as the production line is based on measured demand on each store.

The present payment system mentioned on this patent application for invention shall be described in detail with reference to the figures and drawings listed below, which are:
Figure 1 illustrates, according to a macro description, the process according to which the present system is operated;
Figure 2 illustrates, also according to a macro description, the payment process used on the present payment system;
Figure 3 schematically illustrates the infrastructure that supports the payment system object of this patent application for invention;
Figure 4 illustrates a flowchart related to the registration of users within the scope of the payment system object of this patent application for invention;
Figure 5 illustrates a flowchart related to the order module provided on the present system;
Figure 6 illustrates a flowchart related to the cash change module provided on the present system;
Figure 7 illustrates a flowchart with navigation screens of the system described herein, where each screen is a real representation of the screen seen by the customer when using the payment system mentioned;
Figure 8 illustrates a complementary flowchart also with navigation screens of the system described herein, where such screens are real reproductions of screens seen by the customer when using the payment system object of this patent application for invention; and
Figure 9 schematically illustrates a visual representation of the icon screen the user of the present system has access from his/her mobile phone, which is generically represented by a peripheral outline given exclusively as an example.

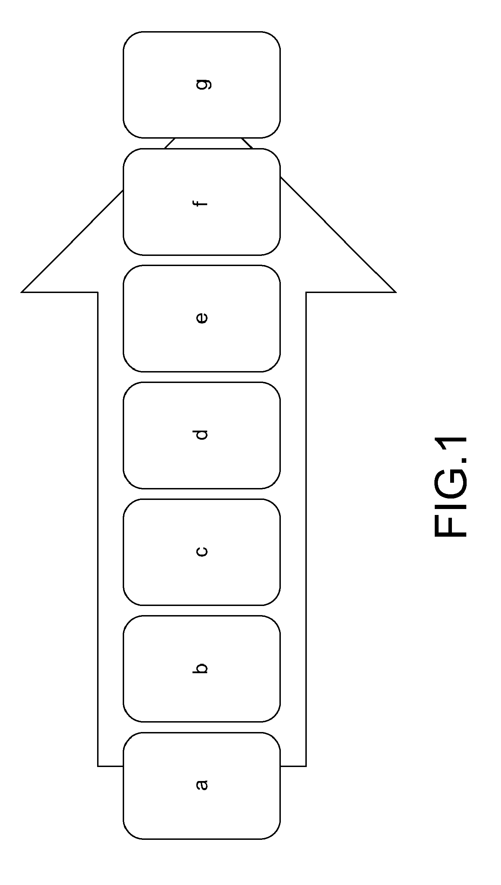

According to what is illustrated by the aforementioned figures, the present payment system object of this patent application for invention provides, according to a macro flowchart presented on Figure 1, the elementary steps according to which: a) the user places his/her order through the present system (named as "Nofeela"); b) after the conclusion of the order, "Nofeela" sends the information through webservice to the "Nofeela" servers; c) the "Nofeela" server processes the data and sends confirmation of the order to the "app" via webservice; d) the user heads to a "Nofeela" registered store and places his mobile device onto the NFC scanner; e) the scanner analyses the order on the "Nofeela" servers and executes the payment process; f) after confirmation of payment, the bill of sale is issued and the order is forwarded to the packaging department; and g) the order is delivered and the user leaves.

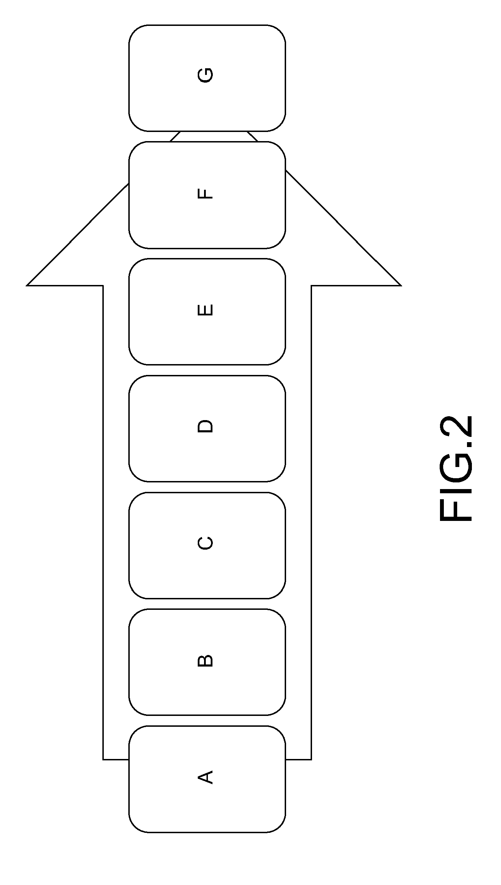

Figure 2, on the other hand, illustrates, through a flowchart, the payment process provided by the system presented herein, where A) the user places his/her mobile device onto the NFC scanner; b) the scanner searches for order information on the "Nofeela" servers and loads it; c) the scanner takes the mobile phone number and starts the payment process; d) the user receives an SMS confirming the purchase and requests a password; e) the POS receives confirmation of payment, authorizes the sale and returns to the "Nofeela" servers that the order was concluded; f) the bill of sale is issued and the order is forwarded to the packaging department; and g) the customer receives confirmation of the purchase via SMS, redeems his product and leaves.

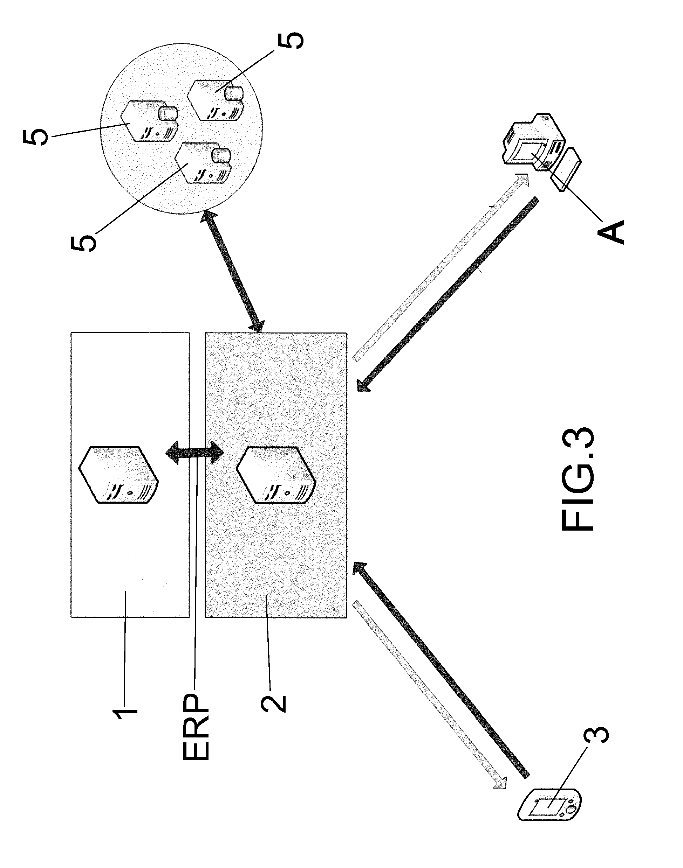

Figure 3 schematically illustrates the infrastructure which supports the payment system presented herein, where a data center 1 is provided which acts as a central hub of the "Nofeela" system, and establishes double-way ERP (Enterprise Resource Planning) communication with a second data center 2 which acts as Host Colocation, with data center 2 establishing communication to a mobile phone device 3 of the "Smartphone" category, properly equipped with the "Nofeela APP"; the second data center 2 established communication with the POS 4 as well, with the second data center 2 establishing communication with the servers 5 of the sales establishments registered to the system, which may be, for example, fast food restaurants, among others.

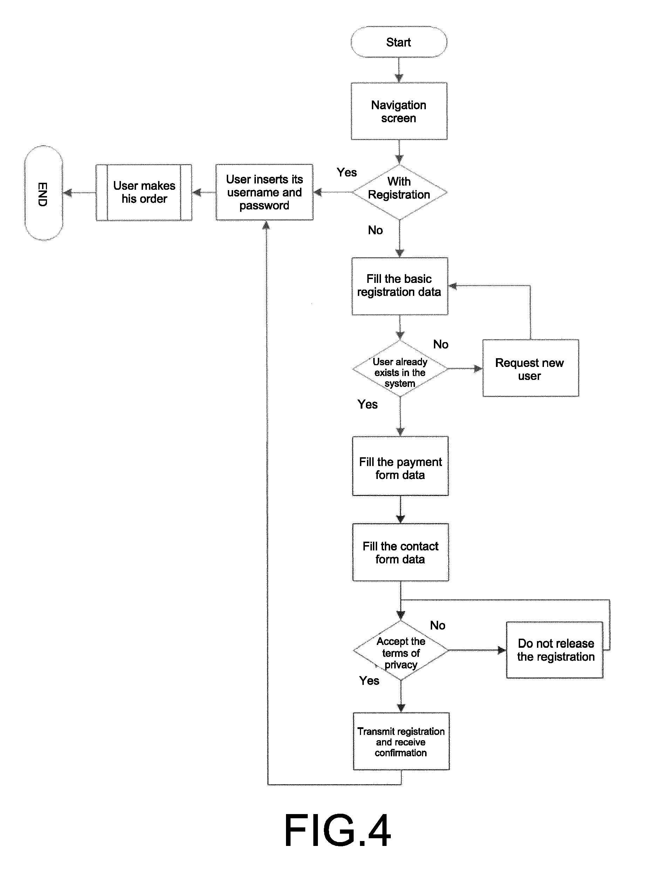

Figure 4 illustrates a flowchart related to the "registration" of users, in which are established, sequentially, the blocks related to this procedure. The aforementioned figure 4 demonstrates, in a logical manner, how user registration is performed, either regarding users (customers) which are already registered to the system, as well as processing the presentation of a non-registered user.

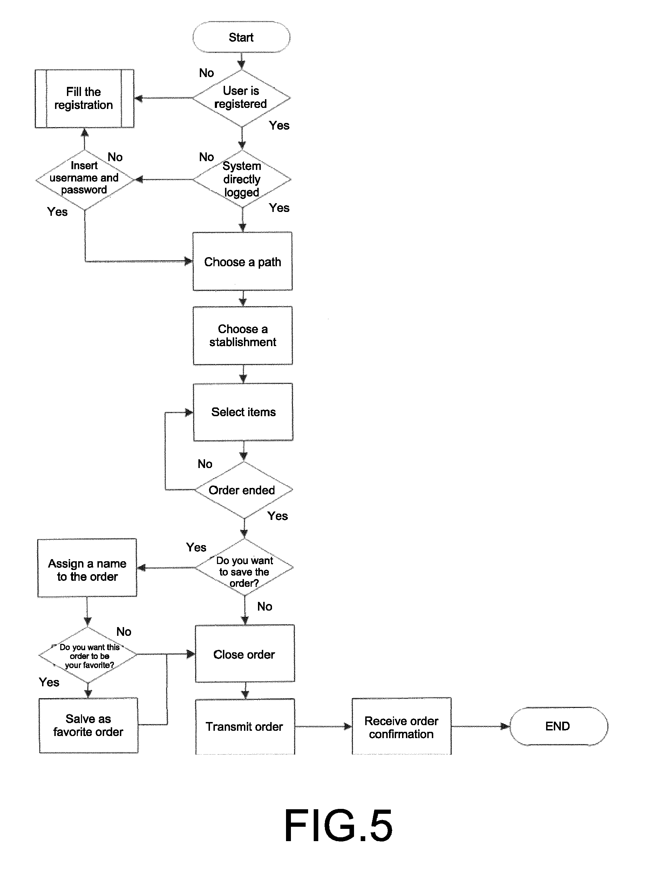

Figure 5 illustrates a flowchart related to the order module used on the current payment system, where order processing within the scope of the present system is presented in a logical manner.

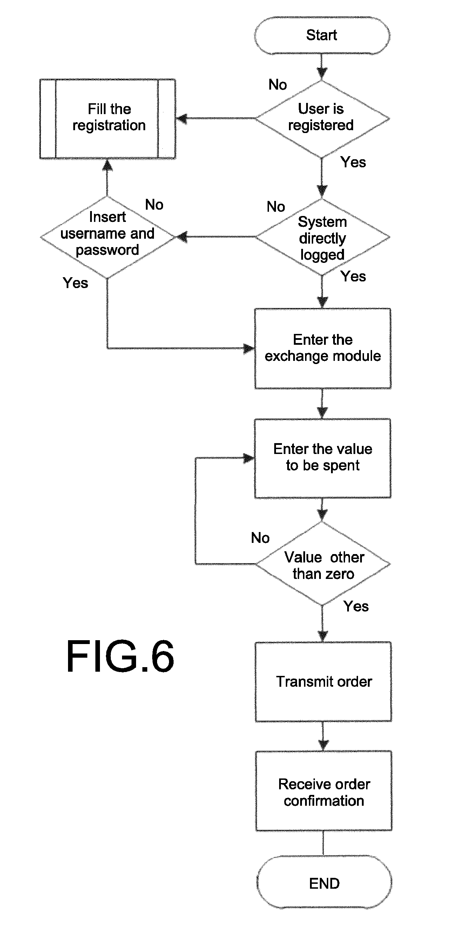

Figure 6 illustrates a flowchart related to the cash change module provided on the present system.

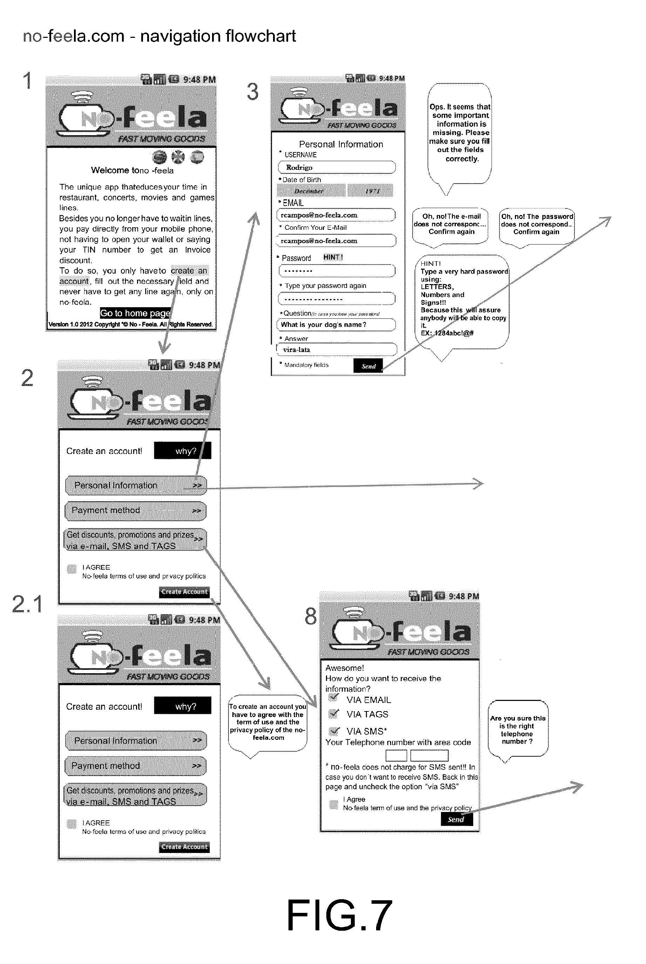

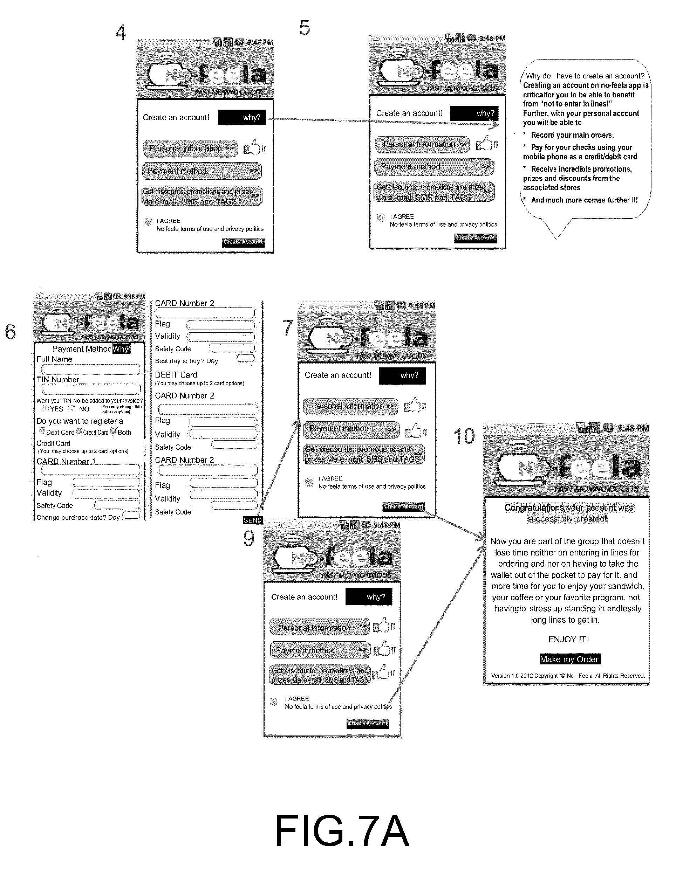

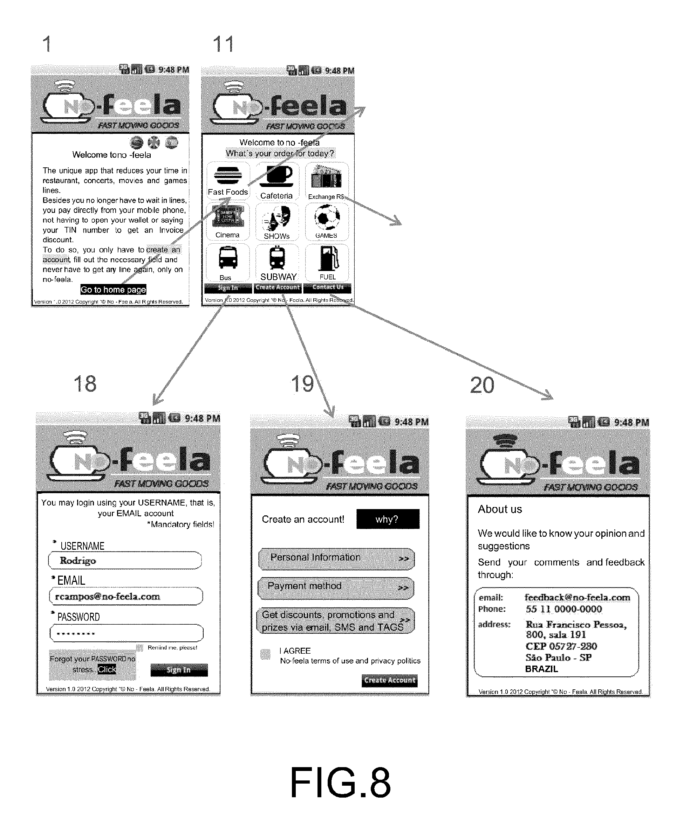

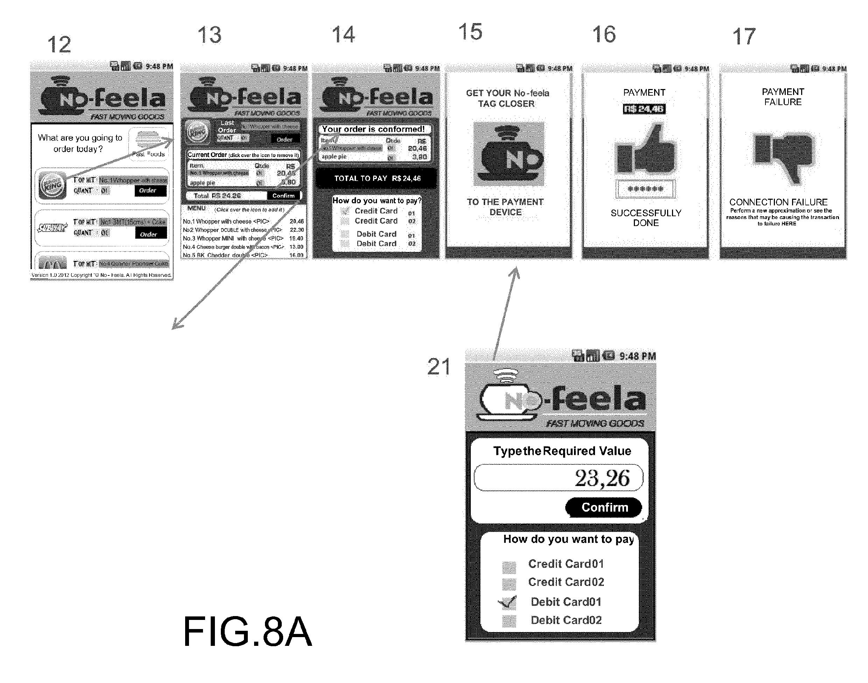

Figure 7 illustrates a flowchart elaborated from the multiple navigation screens used by the system herein presented, while Figure 8 illustrates a complementary flowchart also featuring navigation screens of the system herein presented. Figures 7 and 8 illustrate the navigation screens presented to the user (customer), during his/her utilization of the present system, where the screens are numbered 1 to 10 on Figure 7, or 1 - 11 to 21 on Figure 8, which refer, in each case, to the order that the screens are sequentially presented.

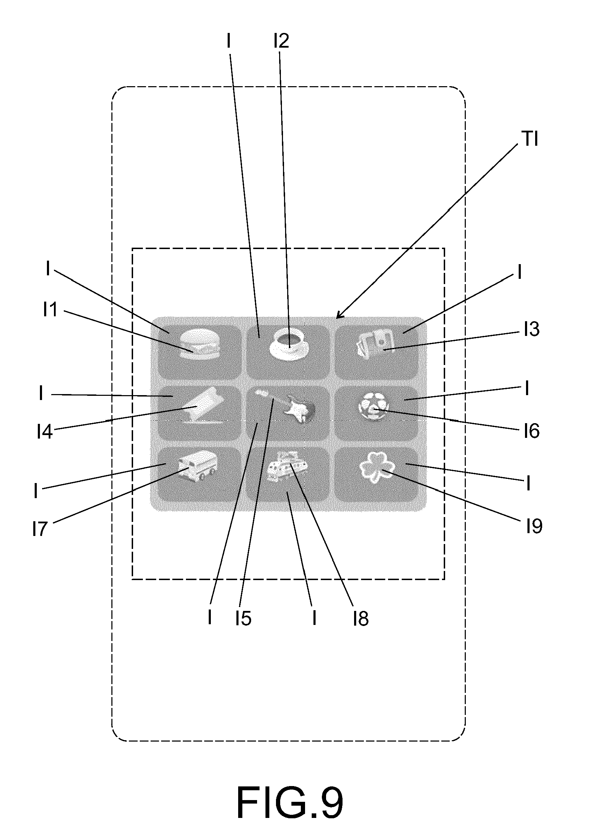

Figure 9 schematically illustrates a visual representation of the icon screen the user of the present system has access from his/her mobile phone, which is generically represented by reference 3, schematically portrayed as a peripheral outline of a generic mobile device model, given exclusively as an example.

The icon screen, generally indicated by the IT reference, encompasses a series of icons individually indicated by the I reference, where, from left to right and from top to bottom: A first icon 11 represented by the image of a hamburger, as such generally alluding to food products and more specifically related to fast food restaurants; a second icon 12 represented by the image of a coffee cup, as such generally alluding to commercial establishments such as cafeterias and others; a third icon 13 represented by the image of a "money wallet", alluding to the procedure of cash change; a fourth icon 14 represented by the image of a ticket, alluding to the purchase of movie and/or concert tickets; a fifth icon 15 represented by the image of a musical instrument, more specifically a guitar, which alludes to musical artistic presentations, such as concerts; a sixth 16 represented by the image of a ball,, more specifically a football, which alludes to sports in general; a seventh icon 17 represented by the image of a shopping bag; an eighth icon 18 represented by the image of a train wagon, which alludes to the payment of subway tickets and others; and a ninth icon 19, representing an interchange, referring to a gas station.

The aforementioned IT icon screen may include other I icons alluding to other products and/or services not originally provided, but which present real interest potential to be adopted and used by the system.

The present system may feature a visual presentation of company queues in which it is used, for example, fast food restaurants, movie theaters and others, since such representation shall refer to a "non-queue", where the customer will join in.

The payment system object of this patent application for invention arises as a viable option for more practicality, swiftness and comfort for the customer on the relationship with the retail market, while also from the point of view of shop owners, the present system brings a whole new set of advantages, starting with the ability to best address the customer base, right where their satisfaction is born out of, improvement of the institutional image of the commercial establishment regarding its customer base, among others.

## Claims

1. "SERVICE AND PRODUCT PURCHASE AND PAYMENT SYSTEM", which features a pre-payment solution for services and/or products with a hybrid "NFC" (Near Field Communication) and SMS (Short Message Service) solution, with the present system providing an infrastructure composed of a data center (1) which acts as a central hub for the system and establishes double-way ERP (Enterprise Resource Planning) communication with a second data center (2) which acts as Host Colocation, with the data center (2) establishing communication to a mobile device (3) of the Smartphone category and properly equipped with the application employed in the present system; the second data center (2) established communication also with POS (4), as well as with the servers (5) of sales establishments registered to the system.

2. "SERVICE AND PRODUCT PURCHASE AND PAYMENT SYSTEM", according to claim 1, wherein the system provides the operation phases, where: a) the user places his/her order through the present system; b) after the conclusion of the order, the application sends the information through webservice to the system servers; c) the system server processes the data and sends confirmation of the order to the application via webservice; d) the user heads to a system registered store and places his mobile device onto the NFC scanner; e) the scanner analyses the order on the system servers and executes the payment process; f) after confirmation of payment, the bill of sale is issued and the order is forwarded to the packaging department; and g) the order is delivered.

3. "SERVICE AND PRODUCT PURCHASE AND PAYMENT SYSTEM", according to claim 1, wherein the system provides the operation phases, regarding the payment process, where: A) the user places his/her mobile device onto the NFC scanner; b) the scanner searches for order information on the system servers and loads it; c) the scanner takes the mobile phone number and starts the payment process; d) the user receives an SMS confirming the purchase and requests a password; e) the POS receives confirmation of payment, authorizes the sale and returns to the system servers that the order was concluded; f) the bill of sale is issued and the order is forwarded to the packaging department; and g) the customer receives confirmation of the purchase via SMS, and redeems his product.
